# EUROPEAN PATENT APPLICATION

(11) **EP 4 651 243 A1**
(43) Date of publication of application: **19.11.2025**
(21) Application number: 24176464.6
(22) Date of filing: 16.05.2024
(51) Int. Cl.: H01M 6/00, H01M 6/42, H01M 10/04, H01M 50/204, H01M 50/244, H01M 50/609

(54) **METHOD AND APPARATUS FOR ASSEMBLING ENERGY STORAGE PACK, AND ENERGY STORAGE PACK**

(71) Applicant: Rimac Technology LLC, 10431 Sveta Nedelja (HR)
(72) Inventor: Skrtic, Ivan, 47262 Generalski Stol (HR); Grdan, Vinko, Varazdin (HR)
(74) Representative: Sonnenberg Harrison Partnerschaft mbB

(57) **Abstract**

A method for assembling an energy storage pack (200), the method comprising providing (S1) the energy storage pack (200) having a frame structure (202), a plurality of energy storage members (204) and a plurality of cooling members (206) for cooling the plurality of energy storage members (204); applying (S2) an assembling pressure (P) on at least one side (210) of the energy storage pack (200) for at least temporarily fixating at least the plurality of energy storage members (204) and the plurality of cooling members (206) in a predefined assembling position; dispensing (S3) a filler (212) inside the frame structure (202), when at least the plurality of energy storage members (204) and the plurality of cooling members (206) are fixated in the predefined assembling position; and releasing (S4) the assembling pressure (P) to obtain the assembled energy storage pack (200).

## Description

### FIELD OF THE INVENTION

The present invention relates to a method for assembling an energy storage pack.

The present invention further relates to an apparatus for assembling an energy storage pack.

The present invention also relates to an energy storage pack.

### BACKGROUND OF THE INVENTION

In the pursuit of efficient energy storage solutions, for example for electrification of vehicles, the integration of battery cells into modular packs has emerged as a cornerstone technology. This approach involves assembling individual battery cells into compact modules, which are then combined to form larger battery packs. While this modular design offers flexibility and scalability, it also introduces challenges, particularly in the realms of connectivity, structural integrity, and cost efficiency.

One of the primary concerns with this modular approach is the proliferation of connectors and structural components required both within individual battery modules and between them. This complexity not only increases the risk of potential failure points but also poses hidden dangers, such as electrical hazards and structural vulnerabilities. Moreover, the extensive use of connecting cables contributes to a significant increase in overall weight, further diminishing the efficiency and practicality of the energy storage system.

Furthermore, the limited utilization of construction space within the battery pack presents an obstacle to maximizing energy density and storage capacity. With only a fraction of the available space dedicated to housing battery cells, the overall performance of the energy storage system is compromised.

Additionally, the high hardware cost associated with manufacturing and integrating these modular battery modules exacerbates the economic feasibility of large-scale energy storage projects. From the production of individual modules to the implementation of complex connecting mechanisms, the financial burden of deploying such systems can be prohibitive.

Thus, there is a call for providing a shift from modular-based designs to a more streamlined approach, thereby, enhancing energy efficiency and simplifying energy storage pack construction.

Against this background, it is an objective of the present invention to provide an improved method and/or apparatus for assembling an energy storage pack and/or an improved energy storage pack.

### SUMMARY OF THE INVENTION

The objective is achieved by a method having the features of claim 1.

The objective is further achieved by an apparatus having the features of claim 8.

The objective is also achieved by an energy storage pack having the features of claim 14.

In a first aspect, there is presented a method for assembling an energy storage pack, the method comprising the steps of providing the to be packed energy storage pack having a frame structure, a plurality of energy storage members and a plurality of cooling members for cooling the plurality of energy storage member, the plurality of energy storage members and the plurality of cooling members being stacked, preferably in an alternating manner, inside the frame structure; applying, by a pressure member, a preferably equally distributed assembling pressure on at least one side of the energy storage pack for at least temporarily fixating at least the plurality of energy storage members and the plurality of cooling members inside the frame structure in a predefined assembling position; dispensing a filler inside the frame structure, when at least the plurality of energy storage members and the plurality of cooling members are fixated in the predefined assembling position; and releasing the assembling pressure after a predetermined curing time and/or curing condition of the filler to obtain the assembled energy storage pack. It shall be understood that the initial step of providing the energy storage pack means that the components of the energy storage pack may be provided before the actual packaging of these components. In. other words, the energy storage pack initially provided in this method is not yet packed, but it is to be packed according to the present method.

In shall be understood that the step of providing the energy storage pack may comprise one or more, preferably subsequential, (pre-) assembling steps, in which the plurality of energy storage members and the plurality of cooling members are stacked, preferably in an alternating manner, inside the frame structure. This stacking may be done at least partly manually or automatically, for example, by using at least a robotic arm or the like that is configured for stacking the plurality of energy storage members and the plurality of cooling members inside the frame structure.

In other words, for the step of providing the energy storage pack, a preferred (pre-) assembly sequence may be subsequent. Such a preferred assembly sequence may include: placing at least one of the cooling member inside the frame structure, most preferably at a side of the frame structure that is opposite to a side where the pressure member is applied to; then, placing at least one of the plurality of energy storage member, followed by placing subsequent at least one of the plurality of cooling member, followed by placing at least one of the plurality of energy storage members, until the side of the frame structure to which the pressure member is applied to is reached or at least nearly reached. The energy storage members may also be named energy storage cells.

It shall be understood that "at least temporarily" member that the fixating may be applied only for assembling purposes and may not be present in the final assembled energy storage pack.

It shall be noted that the energy storage pack, for example the frame structure or any other structural component of the energy storage pack may comprise at least one dispensing member for dispensing the filler inside the frame structure. Such a dispensing member may comprise at least one of at least one opening, a membrane and a preferably unidirectional valve in the frame structure. Furthermore, the energy storage pack, preferably the frame structure, may comprise further filler distribution member, such as distribution channels or the like, to dispense the filler, preferably in an equal manner, inside the frame structure.

It shall be understood that the filler may comprise at least one of an epoxy resin, a polyurethane-based foam, a glue and a foam-forming material.

It shall be understood that the curing condition may comprise at least one of a predefined hardness threshold and another threshold directly or indirectly, for example via consideration in an equation, relating to at least one other physical or mechanical property of at least a part of the filler.

It shall be understood that the plurality of energy storage members may comprise at least one of an electrochemical cell, a battery cell, a fuel cell, a capacitor, a super-capacitor and a photovoltaic cell.

It shall be understood that the plurality of cooling members may comprise at least one of a cooling snake, a cooling plate or a cooling element.

It shall be understood that the frame structure may be configured to at least partly house the plurality of energy storage members and the plurality of cooling member. Therefore, the frame structure may be partly closed to form at least partly a housing of the energy storage pack.

It shall be understood that the term "member" in this context is to be understood as "element" or "module" or "unit". Thus, herein, a "member" may comprise one or more parts, elements, modules, or the like.

The presented method has the advantage that the energy storage pack can be assembled without the need for providing preassembled energy storage modules having a plurality of energy storage member, respectively. In alternative scenarios, a preassembling, i.e. an assembling cells and cooling snakes, and an applying of a pressure may be performed on a jig. Instead, the plurality of energy storage member, and the plurality of cooling members can be assembled directly inside the frame structure and then held in place by the at least one pressure member, at least as long as the predefined curing time and/or curing condition is reached. This enables a safe and precise assembling of the energy storage pack, ensuring that the plurality of energy storage members and the plurality of cooling members are kept in their predefined position until the assembling of the energy storage pack is finished. This assembling method leads to at least one of fewer assembling steps, a more compact use of the available construction space inside the frame structure, a reduced weight of the energy storage pack and a reduction of assembling costs. Furthermore, due to the at least temporarily applying the assembling pressure during assembling, the contacting between the plurality of energy storage members and the plurality of cooling members can be improved, thereby, leading to an improved cooling capacity of the energy storage pack. This improves performance of the energy storage pack, especially under high-power conditions, and leads to an increased lifetime of the energy storage pack. Also, the at least temporarily applying the assembling pressure during assembling, leads to a removal of gaps between the plurality of energy storage members and/or the plurality of cooling member, leading to a better mechanical and thermal contact between the plurality of energy storage members and the plurality of cooling members, and also leading to a more compact packaging.

In a second aspect, the energy storage pack comprises a central beam configured to provide a two-sided mechanical stop for the plurality of energy storage members and the plurality of cooling members that are stacked inside the frame structure, preferably on or away from two sides of the central beam, wherein the assembling pressure is applied on two sides of the energy storage pack for fixating at least the plurality of energy storage members and the plurality of cooling members inside the frame structure regarding the two-sided mechanical stop of the central beam in the predefined assembling position, respectively.

The frame structure may comprise the central beam. The central beam may be connected to at least one part of the frame structure or may be integrally formed with the frame structure. The central beam may provide rigidity for the energy storage pack at least along a length direction of the central beam. The two-sided mechanical stop may be provided on two opposing sides of the central beam, preferably paralleled along the length direction of the central beam. The plurality of energy storage member, and the plurality of cooling members may be stacked inside the frame structure starting from the two opposing sides of the central beam. The two opposing sides may provide an installation area for stacking the plurality of energy storage members and the plurality of cooling member. The central beam may also be configured to guide and/or lead gas and/or air away from the plurality of energy storage members and/or the plurality of cooling member. The central beam may be suitable for providing a centerline of the energy storage pack. The central beam may describe a mirror axis of the energy storage pack.

In a second aspect, the frame structure comprises at least one pressure conduction member, wherein the pressure member comprises at least one pressure element actuatable by an actuator, wherein the applying the assembling pressure comprises pressing the at least one pressure element using the actuator via the at least one pressure conduction member onto the at least one side of the energy storage pack.

Preferably, there are provided a plurality of pressure elements which may be equally distributed along a lengthwise extension of the at least one side of the energy storage pack. The at least one side of the energy storage pack may be a side of the at least one cooling member or a side of the at least one energy storage member or another structural component of the energy storage pack.

Due to the pressing the at least one pressure element, the plurality of energy storage members and the plurality of cooling members are held in their predefined assembling position, to avoid movement of the plurality of energy storage members and/or the plurality of cooling members during the further assembling procedure.

In another aspect, the applying the assembling pressure comprises pressing the at least one pressure element onto at least one of the plurality of cooling members and/or onto at least one of the plurality of energy storage member.

It shall be understood that the pressure element may be configured for applying the assembling pressure onto multiple of the plurality of cooling members and/or energy storage member.

It shall be understood that, depending on the type of the at least one energy storage member, for example applicable for prismatic battery cells, and/or depending on the rigidity of the at least one energy storage member, the assembling pressure may be directly applied onto at least one side of the at least one energy storage member.

It shall be understood that, depending on the type of the at least one cooling member, and/or depending on the rigidity of the at least one cooling member, the assembling pressure may be directly applied onto at least one side of the at least one cooling member.

It shall be understood that the pressure element may be configured for applying the assembling pressure, preferably orthogonally, onto the at least one side of the energy storage member. Thereby, an equal pressure distribution inside the frame structure may be achieved.

In another aspect, the energy storage pack further comprises at least one structural carrier element placed inside the frame structure at least partly encompassing the plurality of energy storage members and/or the plurality of cooling member, the least one structural carrier element being configured for distributing the assembling pressure inside the frame structure to the plurality of energy storage members and the plurality of cooling member, and preferably for holding at least one electronics component, wherein the at least one pressure element is pressed, using the actuator, via the at least one pressure conduction member onto the structural carrier element, preferably onto at least one side of the structural carrier element, most preferably provided orthogonally to a pressure applying direction.

It shall be understood that the structural carrier element may be preferably in a case where the at least one energy storage member and/or the at least one cooling member does not provide a rigidity sufficient for withstanding the assembling pressure.

The preferable electronics component may be a printed circuit board or the like. The structural carrier element may be configured for guiding wires and/or holding other mechanical and/or electronic components. The structural carrier element may be configured for providing an additional layer and/or a crash structure. The structural carrier element may be configured for suiting as a stiffening member of the energy storage pack.

In another aspect, the pressure member comprises a sealing member guided on the at least one pressure element, wherein the pressing comprises pressing the sealing member from an outside of the energy storage pack onto the structure frame for sealing the at least one pressure conduction member for preventing leakage of the filler through the at least one pressure conduction member.

It shall be understood that the sealing member may comprise at least one of a ring seal, a plug-in seal, and a shaft seal.

It shall be understood that the sealing member may be guided concentrically on the at least one pressure element.

It shall be understood that the sealing member may be provided from a material or material composition non-reactive and/or non-adhesive to the filler.

In another aspect, the pressure member comprises a spring configured for pressing the sealing member from the outside of the energy storage pack onto the structure frame, preferably equally distributed around the at least one pressure conduction member.

The at least one spring is preferably guided on the at least one pressure element.

The at least one spring is preferably guided concentrically to a lengthwise direction of the at least one pressure element.

The at least one spring is preferably provided as a spiral spring or a plate spring.

In another aspect, there is provided an apparatus for assembling an energy storage pack; the apparatus comprising: an assembling platform configured for supporting a frame structure of the energy storage pack for assembling the energy storage pack; at least one pressure element; a pressure element carrier configured for carrying the at least one pressure element; an actuator for actuating the at least one pressure element relative to the pressure element carrier; and optionally at least one pillar protruding from the assembling platform and configured for holding the pressure element carrier and for transferring a movement of the actuator to the at least one pressure element, wherein the apparatus is configured for pressing the at least one pressure element using the actuator to apply a preferably equally distributed assembling pressure on at least one side of the energy storage pack for fixating at least a plurality of energy storage members of the energy storage pack and a plurality of cooling members of the energy storage pack inside the frame structure of the energy storage pack in a predefined assembling position.

The aspects presented for the method also apply for the presented apparatus. Also, the aspects presented for the apparatus, apply for the presented method.

It shall be understood that the pillar is an optional feature of the apparatus. In alternative aspects, there may be provided at least one other component configured for holding the pressure element carrier and/or the actuator.

It shall be understood that the assembling platform may provide a support surface or a support structure for supporting the frame structure and the other components of the energy storage pack that is to be assembled. The apparatus may be provided in a production line as one production station.

The pressure element carrier may be configured for carrying the at least one pressure element movable in at least one pressure applying direction.

The pressure element carrier may be configured adjustable for adjusting the at least one pressure element relative to the pressure element carrier.

The apparatus may comprise multiple pressure element carriers.

It shall be understood that actuator may be configured for actuating in an electric, pneumatic, hydraulic and/or magnetic manner.

In another aspect, the at least one pressure element comprises a spring and a sealing member for sealing at least one pressure conduction member of the structure frame from an outside of the energy storage pack, when the assembling pressure is applied, wherein the spring and the sealing member are, preferably concentrically, guided on the at least one pressure element, respectively, wherein the spring is supported by the pressure element carrier to press the sealing member onto the at least one pressure conduction member, preferably when the assembling pressure is applied.

It shall be understood that the pressure element carrier may be configured for providing a mechanical stop for the at least one spring, for example by providing a stop surface or a contact surface for the at least one spring.

In another aspect, the pressure element carrier comprises a hard stop element for restricting movement of the at least one pressure element in at least one direction, or wherein the pressure element carrier comprises a spring element for restricting and/or damping movement of the at least one pressure element in an adjustable manner, particularly for tolerance compensation and/or for restricting the assembling pressure in a predefined manner.

It shall be understood that the spring can be designed to support a contact pressure of the pressure element onto the at least one side of the energy storage pack so that the actuator may have to provide a lower contact pressure.

In another aspect, the at least one pressure element is at least partly made of a material that comprises at least one material property that avoid sticking to the filler, preferably, wherein the at least one pressure element is at least partly made of at least one of PP, PVC and PET.

It shall be understood that the material may have at least one material property for avoiding sticking to the filler. Such a material property may be provided by an additive. Such a material property may be provided as a coating applied on the at least one pressure element. Such a material property may be provided by any suitable surface-treatment. Such a material property may be provided as an intrinsic chemical property of the at least one pressure element.

In another aspect, the at least one pressure element comprises at least two parts differing from one another in stiffness and/or strength and/or stickiness, and preferably being attached to one another in a reversible fashion.

Such a design makes it possible that at least one of the parts can be changed for maintenance due to wear and/or tear. At least one of the parts may be made of a metal or any other suitable rigid material and may be configured as the part to be guided inside the pressure element carrier. The at least other part may be provided to be in contact with the at least one side of the energy storage pack when applying the assembling pressure. The at least two parts may be reversibly connected by screwing and/or plugging. In other configuration, the at least two parts may not be connected reversibly. The at least to parts may thus be connected in an adhesive fashion.

In another aspect, the filler comprises at least one of an epoxy resin, a polyurethane glue, a PU-based foam and an epoxy-based foam.

It shall be understood that the filler, more generally speaking, may comprise any material or material composition suitable for hardening and fixating the energy storage member and the cooling member in their predefined positions.

In another aspect, there is provided an energy storage pack having a frame structure, a plurality of energy storage members and a plurality of cooling members for cooling the plurality of energy storage member, the plurality of energy storage members and the plurality of cooling members are stacked, preferably in an alternating manner, inside the frame structure, wherein a respective assembling position of the plurality of cooling members and the plurality of energy storage members is fixated by a filler dispensed inside the frame structure, wherein the frame structure having at least one pressure conduction member, preferably exclusively configured for assembling purposes.

It shall be understood that due to the at least one pressure conduction member provided at the frame structure, it can be seen that the energy storage pack has been assembled using an assembling method and/or apparatus as claimed before.

In the assembled energy storage pack, the at least one pressure conduction member may fulfil further functions, such as a gas-guiding function.

In another aspect, the energy storage pack further comprising a central beam forming a central structural component of the energy storage pack, dividing the structure frame and/or the energy storage pack into two, preferably similar-sized, compartments, each compartment encompassing a respective part of the plurality of energy storage members and a respective part of the plurality of cooling member, the respective part of the plurality of energy storage members and a respective part of the plurality of cooling members being stacked, preferably in an alternating manner, inside each one of the two compartments, wherein the at least one pressure conduction member is provided on at least two, preferably opposing, sides of the structure frame, preferably on at least two opposing side walls of the structure frame, most preferably, the at least two sides or side walls being paralleled to the central beam, wherein the at least one pressure conduction member is preferably equally distributed along each one of the at least two sides or side walls.

It shall be understood that in other aspects, the energy storage pack may comprise only one compartment. It shall be understood that in other aspects, the energy storage pack may comprise more than two compartments. For example, the central beam may be of a cross-shape therefore comparting the energy storage pack into four or more compartments.

In another aspect, the plurality of energy storage members comprises energy storage cells or energy storage modules each having a plurality of energy storage cells and/or wherein the plurality of cooling members comprises cooling plates and/or cooling snake.

It shall be understood that in some configurations, the energy storage member may be provided as pre-stacked modules of energy storage member that are then placed and/or stacked into the frame structure for assembling the energy storage pack. Such a module may also comprise at least one of the cooling members. For example, such a module may comprise a row of energy storage member, wherein inside the frame structure, such modules are stacked in an assembling direction orthogonal to the lengthwise direction of the row.

In another aspect, the at least one pressure element comprises a pin, and/or wherein the pressure conduction member comprises at least one of an assembling opening, a membrane, a weak spot, a valve, and a movable piston, preferably hosed in the frame structure.

Advantageous aspects of the present disclosure are the subject-matter of the dependent claims. Any and all combinations of at least two features disclosed in the description, the claims, and/or the figures fall within the scope of the present disclosure. Naturally, the explanations given in connection with the energy storage pack equivalently relate to the vehicle according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

All aspects and/or embodiments as described above may be combined as deemed fit by the skilled person. Further possible implementations of the invention also comprise not explicitly mentioned combinations of any features and/or embodiments that are described above or below with respect to the exemplary aspects and/or embodiments. In this case, a person skilled in the art will also add individual aspects as improvements or supplementations to the respective basic form of the invention.

"A(n)" in the present case should not necessarily be understood to be restrictive to exactly one element. Rather, a plurality of elements, such as, for example, two, three, or more, can also be provided. Any other numeral used here, too, should not be understood to the effect that there is a restriction to exactly the stated number of elements. Rather, numerical deviations upwards and downwards are possible, unless indicated to the contrary.

### BRIEF DESCRIPTION OF THE FIGURES

FIG. 1 shows a schematic view of an energy storage pack that is assembled according to one aspect of the presented assembling method by member of a presented apparatus.
FIG. 2 shows a schematic flow chart of an aspect of the assembling method.
FIG. 3 shows a detailed view of a section of an aspect of the presented apparatus.

### DETAILED DESCRIPTION OF THE INVENTION

The invention will now be described on the basis of the figures. It will be under-stood that the aspects and/or embodiments of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

Unless indicated to the contrary, elements that are the same or functionally similarly have been given the same reference signs in the figures. It should also be noted that the illustrations in the figures are not necessarily true to scale.

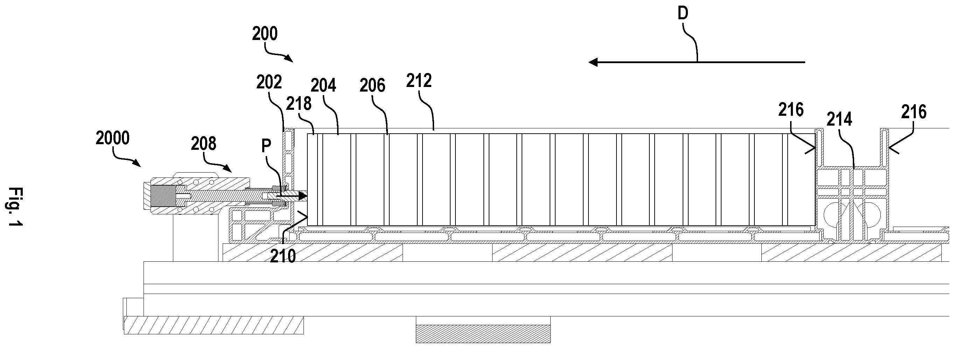

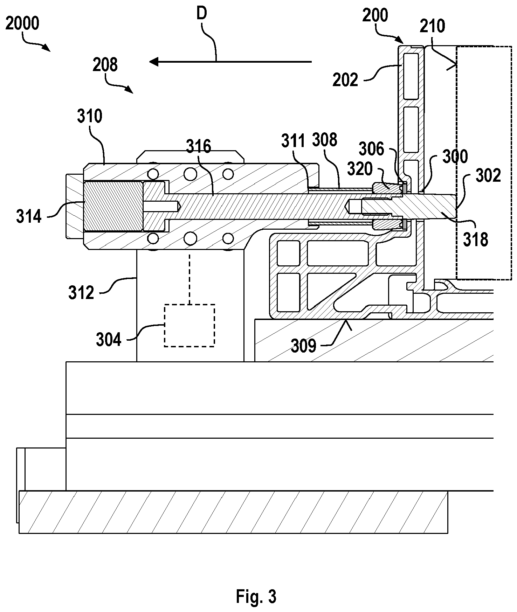

FIG. 1 shows an energy storage pack 200 that is to be assembled by member of an apparatus 2000, which is shown in more detail in Fig. 3 that will be described herein-below.

The energy storage pack 200 comprises a frame structure 202, a plurality of energy storage members 204 and a plurality of cooling members 206 for cooling the plurality of energy storage members 204. The plurality of energy storage members 204 and the plurality of cooling members 206 are stacked inside the frame structure 202 along a stacking direction D.

The apparatus 2000 comprises a pressure member 208 configured for applying an assembling pressure P on at least one side 210 of the energy storage pack 200 for at least temporarily fixating at least the plurality of energy storage members 204 and the plurality of cooling members 206 inside the frame structure 202 in a predefined assembling position. For keeping the plurality of energy storage members 204 and the plurality of cooling members 206 in their assembling position, a filler 212 is dispensed inside the frame structure 202, when at least the plurality of energy storage members 204 and the plurality of cooling members 206 are fixated in the predefined assembling position by the at least one a pressure member 208. The assembling pressure P is released after a predetermined curing time and/or curing condition of the filler 212 is satisfied to obtain the assembled energy storage pack 200.

In Fig. 1, the at least one a pressure member 208 is shown in a position where the assembling pressure P is applied to the at least one side of the energy storage pack 200.

According to Fig. 1, the energy storage pack 200 further comprises a central beam 214 configured to provide a mechanical stop 216 for the plurality of energy storage members 204 and the plurality of cooling members 206 that are stacked inside the frame structure 202 protruding away from at least one side of the central beam 214 along the stacking direction D.

In other embodiments, the central beam 214 is configured to provide a two-sided mechanical stop 216 for the plurality of energy storage members 204 and the plurality of cooling members 206 which may be stacked inside the frame structure 202 protruding away from two sides of the central beam 214 along the stacking direction D. In such a configuration, the apparatus 2000 preferably comprises at least two pressure members 208, each one configured for applying an assembling pressure P on one side 210 of the energy storage pack 200 for at least temporarily fixating at least the plurality of energy storage members 204 and the plurality of cooling members 206 inside the frame structure 202 in a predefined assembling position. The at least two pressure members 208 are preferably placed in an opposing manner on two opposing sides 210 of the energy storage pack 200.

The assembling pressure P may thus also be applied on two opposing sides 210 of the energy storage pack 200 for fixating at least the plurality of energy storage members 204 and the plurality of cooling members 206 inside the frame structure 202 with respect to the two-sided mechanical stop 216 of the central beam 214 in the predefined assembling position, respectively.

In such a case, the central beam 214 forms a central structural component of the energy storage pack 200, dividing the structure frame 202 and/or the energy storage pack 200 into at least two compartments, each compartment encompassing a respective part of the plurality of energy storage members 204 and a respective part of the plurality of cooling members 206.

The respective part of the plurality of energy storage members 204 and a respective part of the plurality of cooling members 206 being stacked inside each one of the two compartments along the stacking direction D. In such a configuration, the assembling pressure P may be provided on at least two sides of the structure frame 202.

In the provided example according to Fig. 1, the energy storage pack comprises at least one structural carrier element 218 that is placed inside the frame structure 202.

The at least one structural carrier element 218 at least partly encompasses the plurality of energy storage members 204 and/or the plurality of cooling members 206. The least one structural carrier element 218 being configured for distributing the assembling pressure P inside the frame structure 202 to the plurality of energy storage members 204 and the plurality of cooling members 206. In the presented configuration, the at least one side is provided by the least one structural carrier element 218.

In other configurations that are not shown, the assembling pressure P may also be applied directly to at least one side of at least one of the plurality of energy storage members 204 and/or to at least one side of at least one of the plurality of cooling members 206.

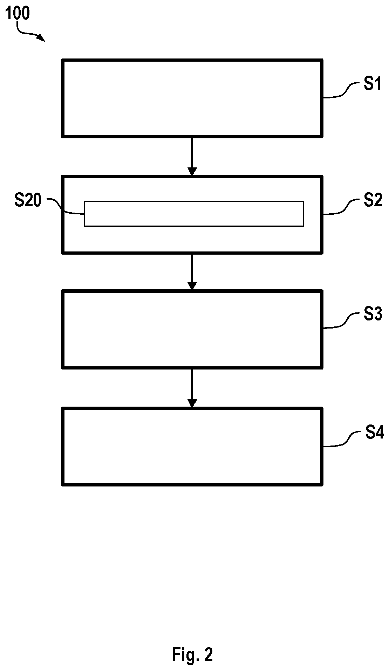

An exemplified method for assembling the energy storage pack 200 is shown by the schematic flow chart of Fig. 2.

In a step S1, the method comprises providing the energy storage pack 200 having the frame structure 202, the plurality of energy storage members 204 and the plurality of cooling members 206 for cooling the plurality of energy storage members 204, the plurality of energy storage members 204 and the plurality of cooling members 206 being stacked inside the frame structure 202.

In a step S2, the method comprises applying, by the at least one pressure member 208, the assembling pressure P on the at least one side 210 of the energy storage pack 200 for at least temporarily fixating at least the plurality of energy storage members 204 and the plurality of cooling members 206 inside the frame structure 202 in the predefined assembling position.

In a step S3, the method comprises dispensing S3 the filler 212 inside the frame structure 202, when at least the plurality of energy storage members 204 and the plurality of cooling members 206 are fixated in the predefined assembling position.

In a step S4, the method comprises releasing the assembling pressure P after a predetermined curing time and/or curing condition of the filler 212 to obtain the assembled energy storage pack 200.

Preferably, the applying S2 the assembling pressure P comprises pressing S20 at least a part of the pressure member 208 onto the at least one side 210 of the energy storage pack 200.

According to Fig. 3, there is provided a detailed view on at least one section of the apparatus 2000.

For interaction with the at least one pressure member, in particular for applying the assembling pressure P on the at least one side 210 of the energy storage pack 200, the frame structure 202 comprises at least one pressure conduction member 300. The pressure conduction members 300, in the presented example, is an opening in the frame structure 202.

As already mentioned before, the apparatus 2000 comprises the pressure member 208.

The pressure member 208 comprises at least one pressure element 302 that is actuatable by an actuator 304. In the presented case, the at least one pressure element 302 comprises a pin.

In the shown example, for applying assembling pressure P, the at least one pressure element 302, i.e., the pin, is pressed to the at least one side 210 of the energy storage pack 200 using the actuator 304. Thereby, the at least one pressure element 302 is pressed via the at least one pressure conduction member 300 onto the at least one side 210 of the energy storage pack 200 (see Fig. 3).

Furthermore, the pressure member 208 comprises a sealing member 306 that is guided on the at least one pressure element 302, i.e., the pin. During pressing of the at least one pressure element 302, the sealing member 306 is pressed from an outside of the energy storage pack 200 onto the structure frame 202 for sealing the at least one pressure conduction member 300 and for preventing leakage of the filler 212 through the at least one pressure conduction member 300.

The pressure member 208 further comprises a spring 308 that is configured for pressing the sealing member 306 from the outside of the energy storage pack 200 onto the structure frame 202.

For supporting the energy storage pack during assembling, the apparatus 2000 further comprises an assembling platform 309 that may be considered as an assembling desk or table.

For guiding the at least one pressure element 302, i.e., the pin, the apparatus 2000 and/or the pressure member 208 comprises a pressure element carrier 310 configured for carrying and movably guiding the at least one pressure element 302, particularly with respect to the energy storage pack 200 that is supported by the assembling platform 309.

The pressure element carrier 310 is also used for providing a contact surface/a mechanical stop 311 for the spring 308, as can be grasped from the Fig. 3.

In the shown example, the apparatus 2000 comprises at least one pillar 312 protruding from the assembling platform 309 and configured for holding the pressure element carrier 310 and for transferring a movement of the actuator 304 that may be provided inside the pillar 312 to the at least one pressure element 302.

The apparatus 2000 is configured for pressing the at least one pressure element 302 using the actuator 304 to apply an assembling pressure P on at least one side 210 of the energy storage pack 200 for fixating at least a plurality of energy storage members 204 of the energy storage pack 200 and a plurality of cooling members 206 of the energy storage pack 200 inside the frame structure 202 of the energy storage pack 200 in a predefined assembling position.

In the shown example, the pressure element carrier 310 further comprises a hard stop element 314 for restricting movement of the at least one pressure element 302 in the stacking direction D. In alternative but not show configurations, instead of a hard stop element, the pressure element carrier 310 may comprise a spring element for restricting and/or damping a movement of the at least one pressure element 302 in an adjustable manner.

In the shown example, the at least one pressure element 302 comprises at least two parts 316, 318 differing from one another in stiffness and/or strength and/or stickiness. The parts 316, 318 are reversibly connected, i.e., screwed, to one another. In the shown example, the part 318 is made of a material that is non-adhesive to the filler 212. In alternative scenarios, the part 318 may have a coating of such a non-adhesive material. The part 316 may be made of a metal or any other suitable rigid material. When the assembling pressure P is applied, the part 318 is in contact with the at least one side 210 of the energy storage pack 200, as this is shown in Fig. 3.

In some configuration, here may be provided a pressure distribution element 320 between the spring 308 and the sealing member 306 for distributing the pressure applied to the sealing member 306 by the spring 308 and for protecting the sealing member 306 against wear and tear.

### LIST OF REFERENCE SIGNS

- 200: energy storage pack
- 202: structure frame
- 204: energy storage member
- 206: cooling member
- 208: pressure member
- 210: side of the energy storage pack
- 212: filler
- 214: central beam
- 216: mechanical stop
- 218: structural carrier element
- 300: pressure conduction member
- 302: pressure element
- 304: actuator
- 306: sealing member
- 308: spring
- 309: assembling platform
- 310: pressure element carrier
- 311: mechanical stop
- 312: pillar
- 314: hard stop element
- 316: part
- 318: part
- 320: pressure distribution element
- 2000: apparatus

- D: stacking direction
- P: assembling pressure
- S1: method step "providing"
- S2: method step "applying"
- S20: method step "pressing"
- S3: method step "dispensing"
- S4: method step "releasing"

## Claims

1. A method for assembling an energy storage pack (200), the method comprising the steps of:
- providing (S 1) the energy storage pack (200) having a frame structure (202), a plurality of energy storage members (204) and a plurality of cooling members (206) for cooling the plurality of energy storage members (204), the plurality of energy storage members (204) and the plurality of cooling members (206) being stacked inside the frame structure (202);
- applying (S2), by a pressure member (208), an assembling pressure (P) on at least one side (210) of the energy storage pack (200) for at least temporarily fixating at least the plurality of energy storage members (204) and the plurality of cooling members (206) inside the frame structure (202) in a predefined assembling position;
- dispensing (S3) a filler (212) inside the frame structure (202), when at least the plurality of energy storage members (204) and the plurality of cooling members (206) are fixated in the predefined assembling position; and
- releasing (S4) the assembling pressure (P) after a predetermined curing time and/or curing condition of the filler (212) to obtain the assembled energy storage pack (200).

2. The method of claim 1, wherein the energy storage pack (200) comprises a central beam (214) configured to provide a two-sided mechanical stop (216) for the plurality of energy storage members (204) and the plurality of cooling members (206) that are stacked inside the frame structure (202) on two sides of the central beam (214), wherein the assembling pressure (P) is applied on two sides (210) of the energy storage pack (200) for fixating at least the plurality of energy storage members (204) and the plurality of cooling members (206) inside the frame structure (202) with respect to the two-sided mechanical stop (216) of the central beam (214) in the predefined assembling position, respectively.

3. The method of claim 1 or 2, wherein the frame structure (202) comprises at least one pressure conduction member (300), wherein the pressure member (208) comprises at least one pressure element (302) actuatable by an actuator (304), wherein the applying (S2) the assembling pressure (P) comprises pressing (S20) the at least one pressure element (302) using the actuator (304) via the at least one pressure conduction member (300) onto the at least one side (210) of the energy storage pack (200).

4. The method of any one of claims 1 to 3, wherein applying (S2) the assembling pressure (P) comprises pressing (S20) the at least one pressure element (302) onto at least one of the plurality of cooling members (206) and/or onto at least one of the plurality of energy storage members (204).

5. The method of any one of claims 1 to 3, wherein the energy storage pack (200) further comprises at least one structural carrier element (218) placed inside the frame structure (202) at least partly encompassing the plurality of energy storage members (204) and/or the plurality of cooling members (206), the least one structural carrier element (218) being configured for distributing the assembling pressure (P) inside the frame structure (202) to the plurality of energy storage members (204) and the plurality of cooling members (206), and wherein the at least one pressure element (302) is pressed, using the actuator (304), via the at least one pressure conduction member (300) onto the structural carrier element (218).

6. The method of claim 4, wherein the pressure member (208) comprises a sealing member (306) guided on the at least one pressure element (302), wherein the pressing (S20) comprises pressing the sealing member (306) from an outside of the energy storage pack (200) onto the structure frame (202) for sealing the at least one pressure conduction member (300) for preventing leakage of the filler (212) through the at least one pressure conduction member (300).

7. The method of claim 6, wherein the pressure member (208) comprises a spring (308) configured for pressing the sealing member (306) from the outside of the energy storage pack (200) onto the structure frame (202).

8. An apparatus (2000) for assembling an energy storage pack (200), the apparatus (2000) comprising:
- an assembling platform (309) configured for supporting a frame structure (202) of the energy storage pack (200) for assembling the energy storage pack (200);
- at least one pressure element (302);
- a pressure element carrier (310) configured for carrying the at least one pressure element (302);
- an actuator (304) for actuating the at least one pressure element (302) relative to the pressure element carrier (310); and
- at least one pillar (312) protruding from the assembling platform (309) and configured for holding the pressure element carrier (310) and for transferring a movement of the actuator (304) to the at least one pressure element (302), wherein the apparatus (2000) is configured for pressing the at least one pressure element (302) using the actuator (304) to apply an assembling pressure (P) on at least one side (210) of the energy storage pack (200) for fixating at least a plurality of energy storage members (204) of the energy storage pack (200) and a plurality of cooling members (206) of the energy storage pack (200) inside the frame structure (202) of the energy storage pack (200) in a predefined assembling position.

9. The apparatus (2000) of claim 8, wherein the at least one pressure element (302) comprises a spring (308) and a sealing member (306) for sealing at least one pressure conduction member (300) of the structure frame (202) from an outside of the energy storage pack (200), when the assembling pressure (P) is applied, wherein the spring (308) and the sealing member (306) are guided on the at least one pressure element (302), respectively, wherein the spring (308) is supported by the pressure element carrier (310) to press the sealing member (306) onto the at least one pressure conduction member (300).

10. The apparatus (2000) of claim 8 or 9, wherein the pressure element carrier (310) comprises a hard stop element (314) for restricting movement of the at least one pressure element (302) in at least one direction, or wherein the pressure element carrier (310) comprises a spring element for restricting movement of the at least one pressure element (302) in an adjustable manner.

11. The method of any one of claims 3 to 7 and/or the assembling apparatus (2000) of any one of claims 8 to 10, wherein the at least one pressure element (302) is at least partly made of a material that comprises at least one material property that avoid sticking to the filler, preferably, wherein the at least one pressure element (302) is at least partly made of at least one of PP, PVC and PET.

12. The method of any one of claims 3 to 7 and/or the assembling apparatus (2000) of any one of claims 8 to 10, wherein the at least one pressure element (302) comprises at least two parts (316, 318) differing from one another in stiffness and/or strength and/or stickiness.

13. The method of any one of claims 3 to 7 and/or the assembling apparatus (2000) of any one of claims 8 to 10, wherein the filler (212) comprises at least one of an epoxy resin, a polyurethane glue, a PU-based foam and an epoxy-based foam.

14. An energy storage pack (200) having a frame structure (202), a plurality of energy storage members (204) and a plurality of cooling members (206) for cooling the plurality of energy storage members (204), the plurality of energy storage members (204) and the plurality of cooling members (206) are stacked inside the frame structure (202), wherein a respective assembling position of the plurality of cooling members (206) and the plurality of energy storage members (204) is fixated by a filler (212) dispensed inside the frame structure (202), wherein the frame structure (202) having at least one pressure conduction member (300).

15. The energy storage pack (200) of claim 14, further comprising a central beam (214) forming a central structural component of the energy storage pack (200), dividing the structure frame (202) and/or the energy storage pack (200) into two compartments, each compartment encompassing a respective part of the plurality of energy storage members (204) and a respective part of the plurality of cooling members (206), the respective part of the plurality of energy storage members (204) and a respective part of the plurality of cooling members (206) being stacked inside each one of the two compartments, wherein the at least one pressure conduction member (300) is provided on at least two sides of the structure frame (202).
